# EUROPÄISCHE PATENTSCHRIFT

(11) **EP 2 904 363 B1**
(45) Veröffentlichungstag und Bekanntmachung des Hinweises auf die Patenterteilung: **07.11.2018**
(21) Anmeldenummer: 13766300.1
(22) Anmeldetag: 24.09.2013
(51) Int. Cl.: G01L 9/00

(54) **DRUCKSENSOR MIT DECKSCHICHT**
PRESSURE SENSOR COMPRISING A COVER LAYER
CAPTEUR DE PRESSION DOTÉ D'UNE COUCHE DE RECOUVREMENT

(30) Priorität: 01.10.2012 DE 102012109325
(43) Veröffentlichungstag der Anmeldung: 12.08.2015
(73) Patentinhaber: Endress+Hauser SE+Co. KG, 79689 Maulburg (DE)
(72) Erfinder: LEMKE, Benjamin, 12051 Berlin (DE); ZIERMANN, René, 14532 Kleinmachnow (DE); POBERING, Sebastian, 99096 Erfurt (DE); RÖDER, Ralf, 99091 Erfurt (DE)
(74) Vertreter: Andres, Angelika Maria
(86) Internationale Anmeldenummer: PCT/EP2013/069763
(87) Internationale Veröffentlichungsnummer: WO 2014/053350

(56) Entgegenhaltungen:
- EP-A2- 2 498 075
- US-A1- 2007 148 788

## Beschreibung

Die Erfindung betrifft einen Drucksensor umfassend ein Substrat mit ausgebildeter dünner Biegeplatte mit integrierten Messelementen und mit einer elektrisch leitfähige Deckschicht, welche elektrische Kontaktelemente aufweist und gegenüber dem Substrat durch eine Isolationsschicht elektrisch isoliert ist.

Drucksensoren sind häufig als Halbleitersensoren ausgebildet. Diese basieren in der Regel auf Silizium. Hierbei können in einer einfachen Weise Drucksensorchips gebildet werden, welche meist ein Substrat und eine darin durch Verfahren der Mikrostrukturierung ausgebildete dünne Biegeplatte mit integrierten Messelementen aufweist. Ein auf die dünne Biegeplatte einwirkender Druck bewirkt eine druckabhängige Auslenkung. Die integrierten Messelemente reagieren mit einer Widerstandsänderung die als elektrisches Messsignal erfasst wird. Damit steht ein Signal zur weiteren Verarbeitung und Auswertung zur Verfügung.

Die Sensorelemente sind dabei in der Regel als piezoresistive Elemente, insbesondere als Widerstände, ausgebildet. Es ist bekannt diese Elemente in Silizium mit Hilfe von Dotierungsverfahren, wie beispielsweise Diffusion oder Implantation, herzustellen. So können die piezoresistiven Elemente beispielsweise als p-leitender Bereich in einem n-leitenden Siliziumsubstrat ausgebildet sein.

Drucksensoren sind während deren Betrieb hohen Belastungen ausgesetzt, wie beispielsweise Druckimpulsen, dauerhaft hohen Drücken und starken Temperaturschwankungen. Druckimpulse und dauerhaft hohe Drücke können zur Materialermüdung und letzten Endes zum Bruch der Membran und damit zum Ausfall des Sensors führen.

Eine Membranbrucherkennung ist hierbei schwierig, da ein fehlerhafter Messwert ebenfalls durch andere Probleme im Sensor, in der Schaltung oder einem anderen verwendeten Element verursacht werden kann oder unter Umständen überhaupt nicht erkannt wird.

Zur Kompensation der Temperaturabhängigkeit des Messsignals wird gemäß dem Stand der Technik die Temperatur mit Hilfe einer Messung der Widerstandsänderung, zum Beispiel die der Messelemente in einer Wheatstone-Brücke verschaltet, bestimmt. Dabei kann mit Hilfe der gemessenen Temperatur und zuvor bestimmter Temperaturabhängigkeit des Messsignals der Temperatureinfluss kompensiert werden. Diese Ausführung hat den Nachteil, dass auch eine Druckänderung zu einer Widerstandsänderung führt und eine direkte Korrelation zwischen Widerstandsänderung und Temperaturänderung erschwert.

Darüber hinaus ist ein Temperaturkoeffizient von verwendeten Widerständen zur Messung derart angepasst, dass für einen Temperatureinsatzbereich des Sensors der Temperaturkoeffizient nicht das Vorzeichen ändert. Bei einer Vorzeichenänderung wird die Verwendung der Brückenschaltung zur Temperaturbestimmung unmöglich, da die Temperatur injektiv bestimmt werden muss.

Neben der Kompensation der Temperaturabhängigkeit des Messsignals ist im Stand der Technik auch ein Schutz vor Störeinflüssen zu finden. Hierzu wird eine Abschirmung in Form einer leitenden Deckschicht auf die Membranoberfläche aufgebracht, welche externe elektrische Störeinflüsse unterbindet, sofern die Abdeckschicht auf dem gleichen Potential liegt, wie das Substrat. Zur Verbesserung der Stabilität des Ausgangssignals werden daher häufig elektrische Abschirmungen eingesetzt, mit denen zumindest die Sensorelemente abgedeckt werden. Metallische Abschirmungen bewirken jedoch ebenfalls eine Rückwirkung auf das Messsignal, so dass insbesondere bei hohen Temperaturen nicht reproduzierbare Abweichungen des Messsignals auftreten können.

Ein zur elektrischen Abschirmung häufig verwendetes Material ist dotiertes Polysilizium. Viele Materialeigenschaften von Polysilizium sind denen von einkristallinem Silizium sehr ähnlich. Diese Materialeigenschaften sind unter Anderem der thermische Ausdehnungskoeffizient, die Härte, sowie die Elastizitäts- und Schermodule. Als Dotierstoffe werden bei der Herstellung von Polysilizium beispielsweise Bor oder Phosphor eingesetzt.

Die Dotierung erfolgt beispielsweise durch Diffusion, durch Implantation oder durch die Zugabe eines Gases während der Abscheidung der als Abschirmung dienenden Deckschicht. Da die Deckschicht zur Temperaturbestimmung dient, ist eine niedrige Dotierung vorteilhaft, um einen hohen Widerstand zu erzielen. Eine niedrige Dotierung weist zudem eine stärkere Temperaturabhängigkeit auf als eine hohe Dotierung und erzeugt somit ein Signal mit ausreichendem Hub zur Die Patentanmeldungen EP 2 498 075 A und US 2007/0148788 offenbaren Drucksensoren entsprechenden Verfahren zur Anwendung.

Für die Sensorelemente ist hingegen eine hohe Dotierung von Vorteil, da diese eine geringere Temperaturabhängigkeit aufweist. Somit können die Sensorelemente nicht optimal zur Druck- und Temperaturmessung gleichzeitig benutzt werden.

Somit stellt sich die Aufgabe, einen Drucksensor bereitzustellen, welcher den Prozess der Druck- und Temperaturmessung optimiert und dabei insbesondere Messfehler kompensiert und eine Fehlererkennung zulässt.

Diese Aufgabe wird durch einen Drucksensor nach Anspruch 1 und ein Verfahren nach Anspruch 4 gelöst. Die Erfindung löst die Aufgabe dadurch, dass sie die drei Aufgaben durch drei optimierte Widerstandsmessungen löst. Dabei ist die niedrig dotierte Deckschicht derartig strukturiert ist, dass in zwei voneinander elektrisch isolierten Bereichen die jeweiligen Widerstände messbar sind und die Messwiderstände in der dünnen Biegeplatte eine hohe Dotierung aufweisen.

Ein besonderer Vorteil der Erfindung gegenüber dem Stand der Technik ist, dass die Deckschicht in zwei voneinander elektrisch isolierte Bereiche unterteilt ist. Dabei ist jeder Bereich mit elektrischen Kontaktelementen versehen, womit in jedem der beiden Bereiche der Widerstand getrennt bestimmbar ist.

Die elektrisch isolierten Bereiche sind dabei einfach aus der bereits im Stand der Technik bekannten Deckschicht formbar. Die Deckschicht wird gemäß dem Stand der Technik flächig abgeschieden und ist ohne weitere Struktur. Entsprechend der Erfindung werden die isolierten Bereiche in einem zusätzlichen Herstellungsschritt, beispielsweise einem Lithographie Verfahren und/oder einem zusätzlichen Ätzprozess, ausgebildet. Die Deckschicht wird dabei vorzugsweise als Polysilizium abgeschieden. Die Deckschicht wird dabei beispielsweise auf eine hierfür hergestellte Oxid oder Oxid-Nitrit Schicht auf die Messmembran aufgetragen um eine ausreichende elektrische Isolierung zwischen der Deckschicht und der Messmembran zu erhalten.

Erfindungsgemäß ist ein erster multifunktionaler, resistiver Bereich der Deckschicht beispielsweise als Schirm ausgebildet und überdeckt die dünne Biegeplatte mit den Messelementen ganz oder teilweise und ein zweiter resistiver Bereich der Deckschicht ist beispielsweise als Thermistor ausgebildet und von der Messmembran mechanisch entkoppelt. Dadurch ist es möglich, in einem einfachen Arbeitsschritt, beispielsweise einem Lithographie Verfahren und/oder Ätzprozess einen Schirm und gleichzeitig einen Thermistor auszubilden, welche getrennt voneinander kontaktiert, und deren Widerstände bestimmt werden können.

Besonders vorteilhaft in dieser Ausführungsform ist, dass die dünne Biegeplatte mit den Messelementen und die Deckschicht unterschiedliche Dotierungen aufweisen können, wobei die aus Silizium geformte Messmembran hierbei mit einer geringeren Dotierung ausgebildet ist. Somit unterscheidet sich die Dotierung des Thermistors von der Dotierung der Sensorelemente und ermöglicht eine getrennte Optimierung der beiden funktionalen Einheiten. Für den Schirm spielt die Dotierung eine untergeordnete Rolle und es ist nicht von Nachteil, die Dotierung des Schirm der des Thermistors anzupassen, sodass beide in einem Prozessschritt abgeschieden werden können und in der selben Dünnschicht strukturiert werden.

Ein weiterer Vorteil besteht darin, dass die Piezoelemente der Messmembran mit einer höheren Dotierung versehen sind als im Stand der Technik möglich. Damit ist der Drucksensor für höhere Arbeitstemperaturen geeignet. Durch die höhere Dotierung der Piezoelemente werden Leckströme vermindert und damit wird die Signalqualität des Ausgangssignals erhöht.

Besonders vorteilhaft ist dabei, dass der Thermistor Bereich der Deckschicht ausserhalb der Messmembran auf der Oberfläche des Drucksensors ausbildbar ist. Dabei wird der Thermistor geringeren mechanischen Spannungen ausgesetzt, wodurch Fehler in einem Temperatur Messsignal des Thermistors auf Grund von mechanischer Spannung vermindert oder ausgeschlossen werden.

Der Drucksensor erlaubt zusätzlich eine Fehler- bzw. Ausfallerkennung. Hierbei kann der Widerstand des Schirm Bereichs der Deckschicht und separat davon die Temperatur über den Thermistor Bereich der Deckschicht bestimmt werden. Im Gegensatz zum Stand der Technik ist es somit möglich eine Änderung des Widerstands im Schirm Bereich der Deckschicht auf eine Temperaturschwankung oder einen Membranbruch zurückzuführen. Liegt ein Membranbruch vor, ändert sich der Widerstand der Decksicht im Gegensatz zu der des Thermistors unstetig. Schwankt die Temperatur, ändern sich die Widerstände beider Bereiche. Hierfür ist es besonders vorteilhaft, den Thermistorbereich der Deckschicht getrennt von dem Membranbereich auszuführen.

Weiterhin ist ein Verfahren zur Anwendung eines Drucksensors umfassend ein Substrat, eine Messmembran und eine strukturierte, elektrisch leitfähige Deckschicht, welche zwei Bereiche und elektrische Kontaktelemente aufweist, vorgesehen, wobei ein Widerstand des ersten resistiven Bereichs der Deckschicht gemessen wird, aus dem gemessenen Widerstand die Temperatur der Deckschicht bestimmt wird und mit Hilfe dieses Temperaturwerts eine Temperaturabhängigkeit eines Druck Messsignals des Drucksensors kompensiert wird.

In einer vorteilhaften Ausführungsform sieht das Verfahren vor den Widerstand des ersten resistiven Bereichs der Deckschicht zu messen und bei einer Änderung des Widerstands eine Beschädigung der Deckschicht und/oder der Messmembran anzuzeigen.

Eine weitere vorteilhafte Ausgestaltung der Erfindung sieht vor, dass der zweite resistive Bereich der Deckschicht Sensorelemente der Messmembran von äusseren elektrischen Feldern und beweglichen Ladungsträgern abschirmt.

Weitere Merkmale, Einzelheiten und Vorteile der Erfindung ergeben sich aus dem Wortlaut der Ansprüche sowie aus der Beschreibung von Ausführungsbeispielen anhand der Figuren.

Die Erfindung wird in weiteren Einzelheiten im Folgenden, mit Bezug auf bevorzugte Ausführungsbeispiele anhand der Figuren näher erläutert.

Es zeigt
- Fig. 1: in einer schematischen Darstellung einen Querschnitt eines Drucksensors versehen mit einer Deckschicht und
- Fig. 2: in einer schematischen Darstellung eine Draufsicht des Drucksensors versehen mit der in zwei Bereiche strukturierten Deckschicht.

Die Bezugszeichen und deren Bedeutung sind zusammengefasst in der Bezugszeichenliste. Im Allgemeinen bezeichnen dieselben Bezugszeichen dieselben Teile.

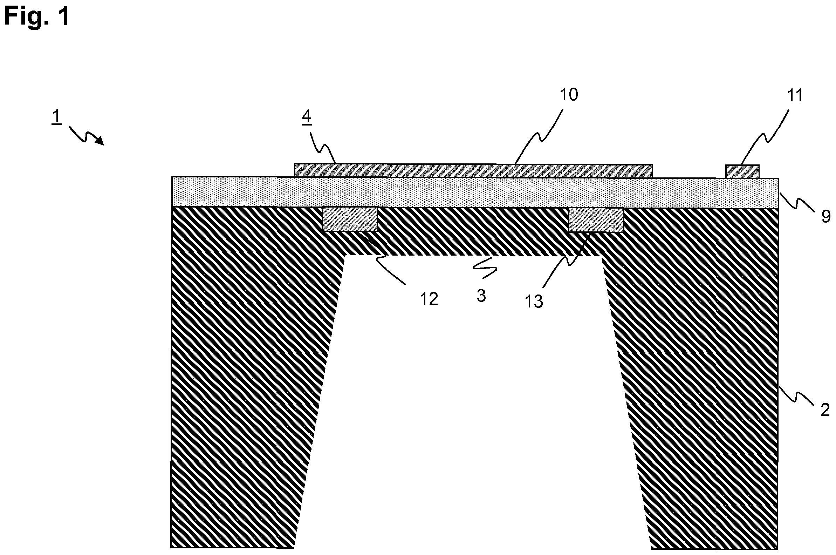

Figur 1 zeigt in einer schematischen Darstellung einen Querschnitt eines Drucksensors 1, umfassend ein Substrat 2, wobei beispielsweise durch einen Ätzprozess eine dünne Biegeplatte 3 in dem Substrat 2 ausgebildet ist. Für die meisten Anwendungen wird die Messmembran 3 und das Substrat 2 aus Silizium geformt.

Die Oberfläche des Drucksensors 1 ist mit einer Deckschicht 4 versehen, welche Kontaktelemente 5, 6, 7, 8 aufweist. Um die Deckschicht 4 elektrisch von dem Substrat 2 zu trennen ist in der dargestellten Ausführungsform eine Isolationsschicht 9 zwischen dem Substrat 2 und der Dickschicht 4 vorgesehen. Die Isolationsschicht 9 ist dabei beispielsweise aus Oxid oder Oxid-Nitrit geformt. Die Deckschicht 4 ist in einen ersten resistiven Bereich 10 und einen zweiten resistiven Bereich 11 strukturiert. Zur Strukturierung der Deckschicht 4 wird beispielsweise ein Lithographieverfahren und/oder ein Ätzprozess verwendet. Die Bereiche 10, 11 der Deckschicht 4 sind mit den Kontaktelementen 5, 6, 7, 8 versehen, über die der Widerstand der einzelnen Bereiche 10, 11 separat bestimmbar ist. Der erste Bereich 10 ist in dieser Ausführungsform als Schirm ausgebildet, welcher Quereinflüsse auf Grund von äusseren elektrischen Feldern und beweglichen Ladungsträgern auf die Messelemente abschirmt und zur Fehlererkennung dient. Der zweite Bereich 11 ist als Thermistor ausgebildet und dient zur Temperaturbestimmung der Deckschicht 4.

Die dünne Biegeplatte 3 ist mit Messelementen 12, 13 versehen, wobei die hier dargestellten Messelemente 12, 13 als piezoresistive Sensorelemente ausgebildet sind. Diese werden in der dünnen Biegepaltte 3 mit Hilfe von Ionenimplantation und anschliessendem Ausheilen erzeugt. Die Messelemente 12, 13 wandeln dabei eine Auslenkung der dünnen Biegeplatte 3 durch einen zu messenden Druck in ein elektrisches Signal um, welches zur weiteren Verarbeitung über entsprechende Anschlussleitungen abgenommen wird.

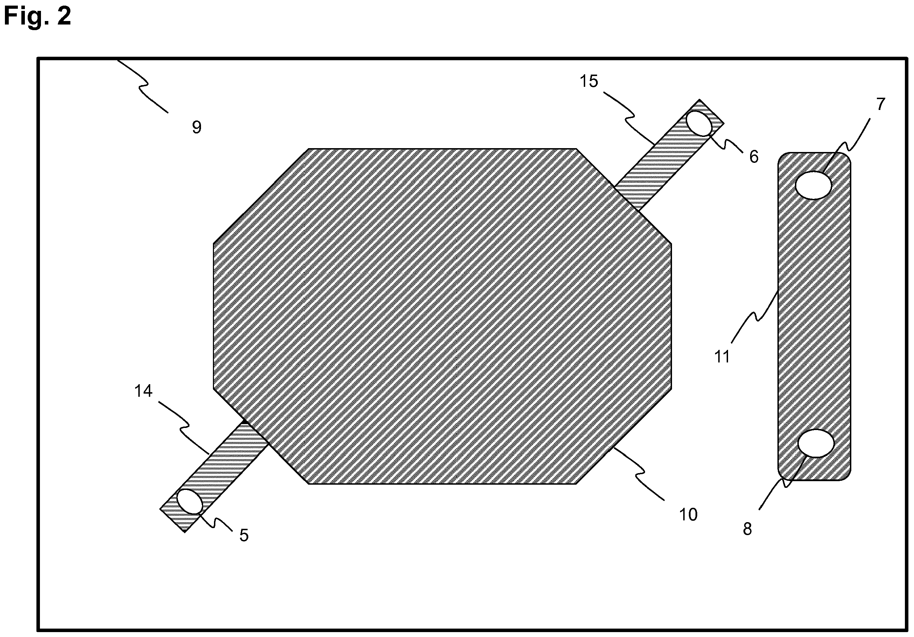

Figur 2 zeigt in einer schematischen Darstellung eine Draufsicht des Drucksensors 1, wobei das Substrat 2 die Isolationsschicht 9 aufweist und diese mit der Deckschicht 4 versehen ist. Die Deckschicht ist in zwei Bereiche 10, 11 strukturiert.

Der erste Bereich 10 weist dabei Zuleitungen 14, 15 auf, welche armartig vom Bereich 10 wegführen und mit den Kontaktelemente 5, 6 versehen sind. Mit Hilfe der Kontaktelemente 5, 6 kann eine elektrische Spannung an den ersten Bereich 10 angelegt werden und/oder der Widerstand des Bereichs 10 bestimmt werden.

Der erste Bereich 10 überdeckt den Bereich der dünnen Biegeplatte 3 des Substrat 2, um zum Einen eine gute Abschirmung von äusseren elektrischen Feldern und beweglichen Ladungsträgern zu gewährleisten und zum Anderen bei einer Beschädigung der dünnen Biegeplatte 3 eine ausreichende Widerstandsänderung zu erfahren, um Schäden eindeutig anzuzeigen. Die Abschirmung erfolgt durch das Anlegen eines Potentials an den ersten Bereich 10. Die Fehlererkennung beziehungsweise das Erkennen einer Beschädigung der Deckschicht 4 und/oder der dünnen Biegeplatte 3 wird durch ein Überwachen des Widerstands des ersten Bereichs 10 der Deckschicht 4 ermöglicht, da bei Beschädigung dieses Bereichs sich der Widerstand unabhängig von einer Temperaturänderung signifikant und unstetig ändert.

Der zweite Bereich 11 ist getrennt von dem ersten Bereich 10 ausserhalb des Bereichs der dünnen Biegeplatte 3 des Substrats 2 ausgebildet. Die separate Ausbildung erlaubt es, den zweiten Bereich 11 zur Temperaturmessung zu verwenden ohne dass druckabhängige Einflüsse bei der Beaufschlagung der dünnen Biegeplatte 3 mit zu einem zu messenden Druck die Messung verfälschen. Weiterhin ist der zweite Bereich 11 mit Kontaktelementen 7, 8 versehen, um den Widerstand des zweiten Bereichs zu bestimmen. Aus dem Widerstand wird mit Hilfe seiner Temperaturabhängigkeit die Temperatur bestimmt. Die Isolationsschicht 9 ist lediglich elektrisch isolierend, ein Wärmeaustausch zwischen der dünnen Biegeplatte 3 und der Deckschicht 4 findet ohne Verfälschung statt. Damit entspricht die Temperatur der Deckschicht 4 auch der Temperatur der dünnen Biegeplatte 3.

Mit Hilfe der über den zweiten Bereich 11 bestimmten Temperatur wird zum Einen ein Temperaturgang des Messsignals der Messelemente 12, 13 kompensiert und zum Anderen dient der Widerstand und/oder die daraus bestimmte Temperatur bei einer Widerstandsänderung des ersten Bereichs 10 der Deckschicht 4 zur Kontrolle oder als Referenz zu Indikation einer Beschädigung der Deckschicht 4 und/oder der dünnen Biegeplatte 3.

### Bezugszeichenliste

- 1: Drucksensor
- 2: Substrat
- 3: dünne Biegeplatte
- 4: Deckschicht
- 5: Kontaktelement
- 6: Kontaktelement
- 7: Kontaktelement
- 8: Kontaktelement
- 9: Isolationsschicht
- 10: Erster Bereich
- 11: Zweiter Bereich
- 12: Messelement
- 13: Messelement
- 14: Zuleitung
- 15: Zuleitung

## Patentansprüche

1. Drucksensor (1), umfassend ein Substrat (2) mit einer ausgebildeten Messmembran (3) mit Sensorelementen (12, 13), vorzugsweise implantierten, hochdotierten, piezoresistiven Sensorelementen, und eine elektrisch leitfähige Deckschicht (4), vorzugsweise aus niedrig dotierten Polysilizium, welche elektrische Kontaktelemente (5, 6, 7, 8) aufweist und gegenüber dem Substrat (2) durch eine Isolationsschicht (9) elektrisch isoliert ist, **dadurch gekennzeichnet,**
**dass** die Deckschicht (4) derartig strukturiert ist, dass in zwei voneinander elektrisch isolierten Bereichen (10, 11) die jeweiligen Widerstände messbar sind, wobei sowohl der erste Bereich (10) wie auch der zweite Bereich (11) der Deckschicht (4) zur elektrischen Kontaktierung mit mindestens zwei Kontaktelementen (5, 6, 7, 8) versehen ist,
wobei die Deckschicht (4) zumindest teilweise oder vollständig aus Poly-Silizium besteht, wobei ein erster resistiver Bereich (10) der Deckschicht (4) die Messmembran (3) ganz oder teilweise überdeckt, wobei der erste resistive Bereich (10) der Deckschicht (4) die Sensorelemente (12, 13) der Messmembran (3) vor äusseren elektrischen Feldern abschirmt.

2. Drucksensor (1) nach Anspruch 1, wobei die Deckschicht (4) und die Sensorelemente (12, 13) unterschiedliche Dotierungen aufweisen.

3. Drucksensor (1) nach einem der vorhergehenden Ansprüche, wobei die Deckschicht (4) auf der Isolationsschicht (9) abgeschieden und in einem Lithographie- und/oder Ätzverfahren strukturiert ist.

4. Verfahren zur Anwendung eines Drucksensors (1) umfassend ein Substrat (2) mit einer ausgebildeten Messmembran (3) mit Sensorelementen (12, 13), vorzugsweise implantierten, hochdotierten, piezoresistiven Sensorelementen, und eine elektrisch leitfähige Deckschicht (4), vorzugsweise niedrig dotiertes Polysilizium, welche elektrische Kontaktelemente (5, 6, 7, 8) aufweist und gegenüber dem Substrat (2) durch eine Isolationsschicht (9) elektrisch isoliert ist, wobei die Deckschicht (4) derartig strukturiert ist, dass in zwei voneinander elektrisch isolierten Bereichen (10, 11) die jeweiligen Widerstände messbar sind, wobei sowohl der erste Bereich (10) wie auch der zweite Bereich (11) der Deckschicht (4) zur elektrischen Kontaktierung mit mindestens zwei Kontaktelementen (5, 6, 7, 8) versehen ist, wobei die Deckschicht (4) zumindest teilweise oder vollständig aus Poly-Silizium besteht, wobei ein erster resistiver Bereich (10) der Deckschicht (4) die Messmembran (3) ganz oder teilweise überdeckt, wobei der erste resistive Bereich (10) der Deckschicht (4) die Sensorelemente (12, 13) der Messmembran (3) vor äusseren elektrischen Feldern abschirmt, wobei
- ein Widerstand des zweiten resistiven Bereichs (11) der Deckschicht (4) gemessen wird,
- aus dem gemessenen Widerstand die Temperatur der Deckschicht (4) bestimmt wird und
- mit Hilfe der bestimmten Temperatur eine Temperaturabhängigkeit eines Druck Messsignals des Drucksensors (1) kompensiert wird.

5. Verfahren nach Anspruch 4, wobei der Widerstand des ersten resistiven Bereichs (10) der Deckschicht (4) gemessen wird und bei einer Änderung des Widerstands eine Beschädigung der Deckschicht (4) und/oder der Messmembran (3) angezeigt wird.

## Claims

1. Pressure sensor (1) comprising a substrate (2) with a formed measuring diaphragm (3) with sensor elements (12, 13), preferably implanted, heavily doped, piezoresistive sensor elements, and an electrically conductive cover layer (4), preferably in low-doped polysilicon, which has electrical contact elements (5, 6, 7, 8) and is electrically isolated from the substrate (2) by means of an isolation layer (9),
**characterized in that**
the cover layer (4) is structured in such a way that it is possible to measure the respective resistances in two areas (10, 11) that are electrically isolated from one another, wherein both the first area (10) and the second area (11) of the cover layer (4) are provided with at least two contact elements (5, 6, 7, 8) for the purpose of establishing an electrical contact,
wherein the cover layer (4) is at least partially or entirely made from polysilicon, wherein a first resistive area (10) of the cover layer (4) covers the measuring diaphragm (3) entirely or partially, wherein the first resistive area (10) of the cover layer (4) screens the sensor elements (12, 13) of the measuring diaphragm (3) from external electric fields.

2. Pressure sensor (1) as claimed in Claim 1, wherein the cover layer (4) and the sensor elements (12, 13) have different doping.

3. Pressure sensor (1) as claimed in one of the previous claims, wherein the cover layer (4) is isolated on the isolation layer (9) and structured in a lithography and/or etching process.

4. Procedure for the use of a pressure sensor (1) comprising a substrate (2) with a formed measuring diaphragm (3) with sensor elements (12, 13), preferably implanted, heavily doped, piezoresistive sensor elements, and an electrically conductive cover layer (4), preferably in low-doped polysilicon, which has electrical contact elements (5, 6, 7, 8) and is electrically isolated from the substrate (2) by means of an isolation layer (9), wherein the cover layer (4) is structured in such a way that it is possible to measure the respective resistances in two areas (10, 11) that are electrically isolated from one another, wherein both the first area (10) and the second area (11) of the cover layer (4) are provided with at least two contact elements (5, 6, 7, 8) for the purpose of establishing an electrical contact, wherein the cover layer (4) is at least partially or entirely made from polysilicon, wherein a first resistive area (10) of the cover layer (4) covers the measuring diaphragm (3) entirely or partially, wherein the first resistive area (10) of the cover layer (4) screens the sensor elements (12, 13) of the measuring diaphragm (3) from external electric fields wherein,
- a resistance of the second resistive area (11) of the cover layer (4) is measured,
- the temperature of the cover layer (4) is determined from the measured resistance, and
- a temperature dependence of a pressure measuring signal coming from the pressure sensor (1) is compensated for using the temperature determined.

5. Procedure as claimed in Claim 4,
wherein the resistance of the first resistive area (10) of the cover layer (4) is measured and, if the resistance changes, damage to the cover layer (4) and/or the measuring diaphragm (3) is indicated.

## Revendications

1. Capteur de pression (1) comprenant un substrat (2) avec une membrane de mesure (3) formée avec des éléments de capteur (12, 13), de préférence des éléments de capteur implantés, fortement dopés, piézorésistifs, et une couche de revêtement (4) électroconductrice, de préférence en polysilicium faiblement dopé, laquelle présente des éléments de contact (5, 6, 7, 8) et est isolée électriquement par rapport au substrat (2) au moyen d'une couche d'isolation (9),
**caractérisé**
**en ce que** la couche de revêtement (4) est structurée de telle sorte à permettre la mesure des résistances respectives au sein de deux zones (10, 11) isolées électriquement l'une de l'autre, la première zone (10) et la deuxième zone (11) de la couche de revêtement (4) étant toutes deux munies d'au moins deux éléments de contact (5, 6, 7, 8) en vue d'établir un contact électrique,
la couche de revêtement (4) étant constituée au moins partiellement ou intégralement de polysilicium, une première zone résistive (10) de la couche de revêtement (4) recouvrant entièrement ou partiellement la membrane de mesure (3), la première zone résistive (10) de la couche de revêtement (4) protégeant les éléments de capteur (12, 13) de la membrane de mesure (3) contre les champs électriques extérieurs.

2. Capteur de pression (1) selon la revendication 1, pour lequel la couche de revêtement (4) et les éléments de capteur (12, 13) présentent différents dopages.

3. Capteur de pression (1) selon l'une des revendications précédentes, pour lequel la couche de revêtement (4) est isolée au moyen d'une couche d'isolation (9) et structurée selon un procédé de lithographie ou de gravure.

4. Procédé destiné à l'utilisation d'un capteur de pression (1) comprenant un substrat (2) avec une membrane de mesure (3) formée avec des éléments de capteur (12, 13), de préférence des éléments de capteur implantés, fortement dopés, piézorésistifs, et une couche de revêtement (4) électroconductrice, de préférence en polysilicium faiblement dopé, laquelle présente des éléments de contact (5, 6, 7, 8) et est isolée électriquement par rapport au substrat (2) au moyen d'une couche d'isolation (9), la couche de revêtement (4) étant structurée de telle sorte à permettre la mesure des résistances respectives au sein de deux zones (10, 11) isolées électriquement l'une de l'autre, la première zone (10) et la deuxième zone (11) de la couche de revêtement (4) étant toutes deux munies d'au moins deux éléments de contact (5, 6, 7, 8) en vue d'établir un contact électrique, la couche de revêtement (4) étant constituée au moins partiellement ou intégralement de polysilicium, une première zone résistive (10) de la couche de revêtement (4) recouvrant entièrement ou partiellement la membrane de mesure (3), la première zone résistive (10) de la couche de revêtement (4) protégeant les éléments de capteur (12, 13) de la membrane de mesure (3) contre les champs électriques extérieurs,
procédé pour lequel
- une résistance de la deuxième zone résistive (11) de la couche de revêtement (4) est mesurée,
- la température de la couche de revêtement (4) est déterminée à partir de la résistance mesurée et
- une dépendance de température d'un signal de mesure de pression provenant du capteur de pression (1) est compensée à l'aide de la température déterminée.

5. Procédé selon la revendication 4,
pour lequel la résistance de la première zone résistive (10) de la couche de revêtement (4) est mesurée et, en cas de changement de la résistance, un endommagement de la couche de revêtement (4) et/ou de la membrane de mesure est affiché.
